# EUROPEAN PATENT SPECIFICATION

(11) **EP 2 562 063 B1**
(45) Date of publication and mention of the grant of the patent: **21.05.2014**
(21) Application number: 11006806.1
(22) Date of filing: 20.08.2011
(51) Int. Cl.: B62D 5/00

(54) **Steering unit for a steer-by-wire steering system**
Lenkeinheit für ein Steer-by-Wire-Lenksystem
Unité de direction pour un système de direction (steer-by-wire)

(43) Date of publication of application: 27.02.2013
(73) Proprietor: Sauer-Danfoss ApS, 6430 Nordborg (DK)
(72) Inventor: Kristensen, John, 6400 Soenderborg (DK)
(74) Representative: Jennings, Nigel Robin

(56) References cited:
- WO-A2-03/036120
- DE-C1- 19 755 044
- DE-U1-202006 003 663

## Description

The invention relates to a steering unit for a steer-by-wire steering system, said steering unit comprising a steering shaft having a connecting position for a connection to a steering element, a sensor arrangement connected to said steering shaft, and force feedback means acting on the steering shaft and return spring means acting on the steering shaft.

Document DE 197 55 044 C1 discloses the preamble of claim 1.

A steer-by-wire steering system uses a steering motor for turning a steered element of a vehicle, e. g. the steered wheels of vehicle. The steering motor can be of any suitable kind, e. g. a hydraulic motor, an electrical motor or the like. The steering unit is used to control the operation of the steering motor. However, there is no physical steering movement transmitting connection between a steering element, e.g. a steering wheel, and the steered elements. A driver, who is used to drive a vehicle of a conventional kind having a physical connection between the steering element and the steered elements is often confused by such steer-by-wire steering system since there is no feedback from the steered elements, e.g. the steered wheels, to the steering element. In order to simulate such a feedback, feedback means are used for two purposes. The first purpose is to return the steering element into a neutral position, when the steered elements have been returned into the neutral position. The second purpose of the feedback means is to create a counter force against the movement of the steering element and to define an end-stop for the steering element. The last purpose is often achieved with the help of brake means. These brake means can be designed to prevent any further rotation of the steering shaft when an end-position of steered elements has been reached. The first purpose is achieved with help of the return spring means.

However, in order to bring the steering element back to the neutral position the return spring means has to act on the steering shaft from the neutral position on. This has the effect that the driver experiences a rather high torque from the beginning of the movement of the steering element which does not correspond to the behaviour of the conventional vehicle having a mechanical connection between the steering element and the steered elements.

The task underlying the invention is to provide an almost realistic feedback behaviour.

This task is solved by the steering unit of the kind mentioned above, in that said steering shaft comprises a first section and a second section, said first section comprising said connecting position, said return spring acting on said second section, wherein the first section and the second section are coupled by coupling moment means, said coupling moment means allowing a rotation of the two sections relative to each other over a limited angle.

When the driver actuates the steering element the first section of the steering shaft is rotated. The rotation of the first section is transmitted to the second section via the coupling moment means. Since the second section is held in the neutral position by the return spring means, the coupling moment means is charged by the torque exerted by the first section of the steering shaft and starts creating a counter moment, i.e. a torque in a direction opposite to the steering torque. The driver experiences an increase of the torque starting from zero. When the rotation of the first section of the steering shaft relative to the second section of the steering shaft exceeds the limited angle, the return spring means is additionally tensioned since the second section of the steering shaft now is directly driven by the first section of the steering shaft. When the steering element has to be returned into neutral position the return spring means turn back the second section of the steering shaft to the neutral position and the coupling moment means turn back the first section into a neutral position relative to the second section. The behaviour of the force feedback means corresponds more realistic to the behaviour of a steering system having a direct connection between the steering element and the steered elements.

Preferably, said sensor arrangement is coupled to said first section. Although a relative movement between the two sections of the steering shaft is possible, there is no relative movement between the steering element and the sensor arrangement, more precisely the transmitter of said sensor arrangement, so that the information generated by the sensor arrangement corresponds directly to the angular position of the steering element.

Preferably said force feedback means comprise brake means, wherein said brake means act on said second section. In this way it is possible to release the steering shaft from an end-stop. In an end-stop position the brake means block the steering shaft from any further rotation. However, the rotation is not only blocked in one direction but in both directions. This makes it difficult for the return spring means to return the steering shaft into the neutral position. However, in the present case the first section of the steering shaft is still able to rotate relative to the second section of the steering shaft about the above mentioned limited angle. When the driver releases the steering element the coupling moment means rotate the first section of the steering shaft in a direction out of the end-stop. Such a rotation is detected by the sensor arrangement. When the sensor arrangement detects that the steering shaft has left the end-stop position, it releases the brake so that the return spring can return the complete steering shaft back to the neutral position.

Preferably said limited angle is at least 5°. The limited angle is rather small. However, such a small angle is sufficient to create a torque-over-angle-function having a torque starting from zero as it is the case in a steering system having a direct connection between the steering element and the steered element.

Preferably, said coupling moment means generate a counter moment in a direction opposite to a steering moment, said counter moment being smaller than a moment created by said return spring means. That means that firstly the coupling spring means is fully loaded before the return spring means is charged. In other words, the two spring means are charged one after the other.

In a preferred embodiment said coupling moment means comprise coupling spring means. Spring means are simple means to create a counter torque.

In a preferred embodiment said second section comprises a sleeve surrounding at least a part of said first section. In other words, the first section is inserted into the second section. In this way the additional space needed for the division of the steering shaft in two sections is kept small.

Preferably, said return spring means is formed as a helical coil spring surrounding a part of said sleeve. The return spring means can act on a larger diameter. Since the torque depends on the force of the return spring means on the one hand and the diameter of the sleeve on the other hand, such a solution is advantageous since the return spring means can be rather small.

Preferably said brake means comprise a braking plate connected to said sleeve. The braking plate has a diameter larger than that of the sleeve. In this case the brake means can act on the sleeve via a rather long arm. The braking force therefore can be reduced.

In a preferred embodiment said coupling moment means is inserted in both of said sleeve and said first section. The coupling moment means do not need any additional space. Therefore, the construction can be kept small.

In this case it is preferred that said first section comprises a through bore and said coupling moment means are arranged in said through bore and are inserted into said sleeve at both ends of that through bore. This makes the mounting of the coupling moment means simple and reliable. It can be controlled whether the coupling moment means is mounted correctly.

Preferably said coupling spring means comprise at least one leaf spring, said leaf spring having a curved section extending over at least a middle part of said leaf spring, said curved section contacting an element moveable together with said first section of said steering shaft. When the first section is rotated relative to the second section the curved section of the leaf spring is flattened and creates reaction force tending to turn back the first section relative to the second section. The element moveable together with that first section can be a plate inserted into said first section or even a surface of the through bore of the first section itself.

However, it is preferred that said coupling spring means comprises at least a first leaf spring and a second leaf spring, said first and second leaf spring each having sections curved in opposite directions relative to each other, said second leaf spring forming said element moveable together with that first section of that steering shaft. The two sections curved in opposite directions contact each other at the centre of the curved sections. When the first section of the steering shaft is rotated relatively to the second section of the steering shaft, the two curved sections are flattened creating a rather high return force in a simple manner.

A preferred embodiment of the invention will now be described in more detail with reference to the drawing wherein:
- Fig. 1: is a schematic view of a steer-by-wire steering system,
- Fig. 2: is a schematic sectional view of a steering unit and
- Fig. 3: a detailed view of coupling spring means, and
- Fig. 4: a torque-angle-function of the steering unit of Fig. 2.

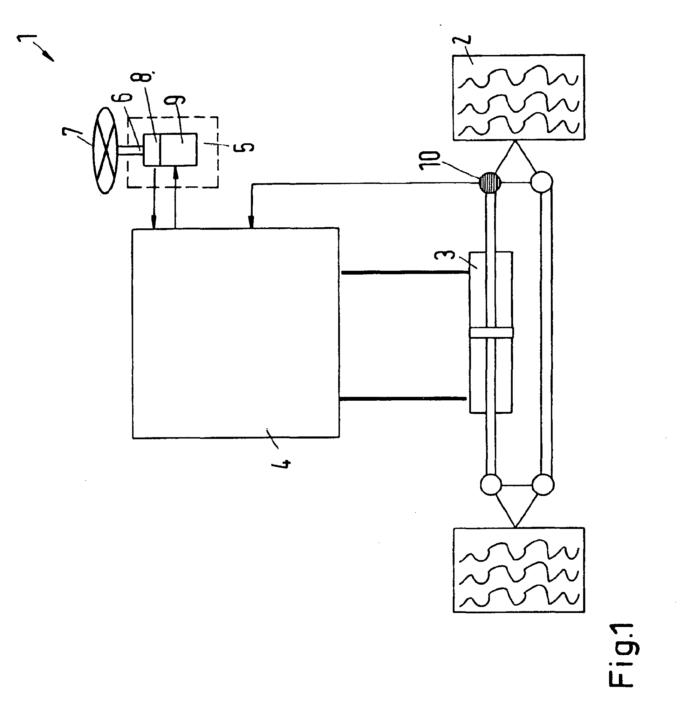

Fig. 1 schematically shows a steer-by-wire system 1 for steering wheels 2 of a vehicle. The steered wheels 2 are actuated by a steering motor 3 which in the present example is a hydraulic motor. However any other kind of suitable motor can be used.

The steering motor 3 is controlled by a control element 4. In the present example the control element 4 is an electro-hydraulic control element. The kind of control element 4 used in the steering system 1 depends on the steering motor 3 used in the steering system 1.

The control element 4 is controlled by a steering unit 5. The steering unit 5 comprises a steering shaft 6 which is in the present example connected to a steering wheel 7. However, other kinds of steering elements are possible as long as such steering elements are able to allow a driver to turn the steering shaft 6.

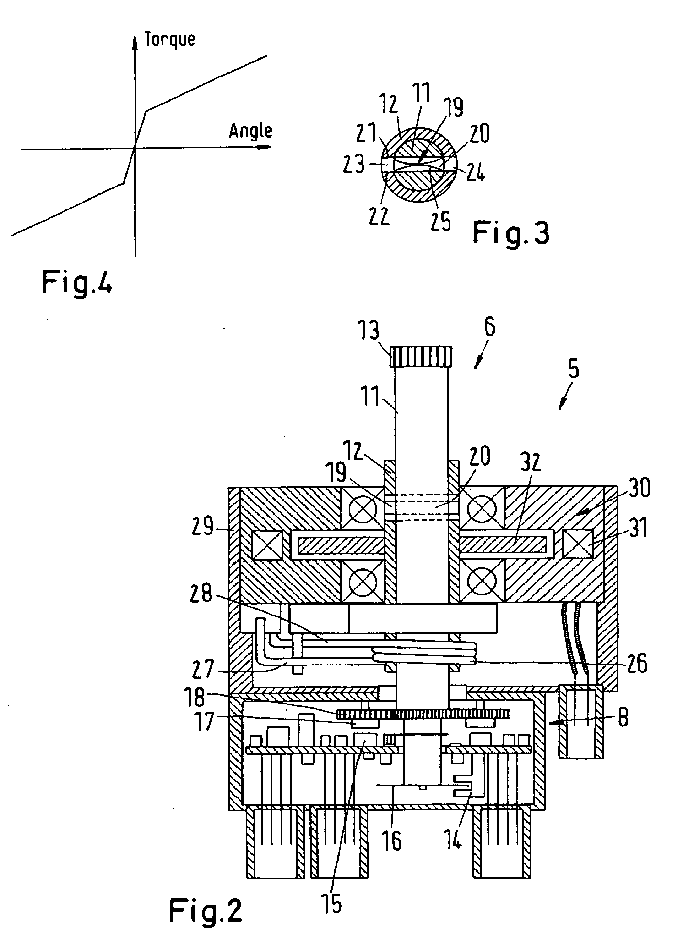

Furthermore, the steering unit 5 comprises a sensor arrangement 8 and force feedback means 9 as will be explained later on in connection with Fig. 2.

A position sensor 10 detects the steering angle of the steered wheels and feeds back this position to the control element 4 which in turn feeds back this position information to the steering unit 5. It is also possible to directly connect the position sensor 10 to the steering unit 5. When the steering angle can be detected by other means, e.g. an electrical stepping motor used as steering motor 3, the position sensor 10 can be omitted.

The steering unit 5 is shown with more details in Fig. 2.

The driving shaft 6 is divided. It comprises a first section 11 and a second section 12. The first section 11 is provided with a connecting position 13 for connection to the steering wheel 7. Furthermore, the first section 11 is connected to the sensor arrangement 8. The sensor arrangement 8 comprises in a manner known per se a plurality of sensors 14, 15 and transmitters 16, 17, wherein the transmitters 16, 17 are coupled directly or via a gear 18 to the first section 11 of the steering shaft 6. In this way a sensor arrangement 8 is able to directly detect the angular position of the steering wheel 7.

The second section 12 of the steering shaft 6 is formed as a sleeve surrounding the first section 11 of the steering shaft 6 over a part of its length. The second section 12 of the steering shaft 6 is coupled to the first section 11 by means of coupling moment means 19 shown in Fig. 3. In the embodiment described the coupling moment means 19 are designed as coupling spring means.

The first section 11 has a through bore 20. Two leaf springs 21, 22 forming said coupling spring means are inserted into that through bore 20. The ends of the leaf springs 21, 22 are inserted into bores 23, 24 in the wall of a sleeve of a second section 12 (Fig. 3). These bores 23, 24 have a position corresponding to the position of the through bore 20 in axial direction of the steering shaft 6.

Each leaf spring 21, 22 has a curved section 25 extending over at least a middle part of that leaf spring 21, 22. The leaf springs 21, 22 are mounted in the bores 20, 23, 24 so that the curved sections 25 are curved in opposite directions. The curved sections 25 of the leaf springs 21, 22 contact each other in the middle part of the leaf springs 21, 22. The coupling spring means allow a rotation of the first section 11 relative to the second section 12 of the steering shaft 6 over a limited angle in the range of 5° to 12° or more. A rotation is possible as long as the bores 23, 24 overlap the through bore 20. The relative rotation stops short before this overlapping ends.

The second section 12 is connected to return spring means 26 which in the present case is formed as a helical coil spring fixed to the second section 12 and having two arms 27, 28. Each arm 27, 28 is fixed against a rotation in one direction in a housing 29 of the steering unit 5.

Furthermore, the steering unit 5 comprises brake means 30. These brake means 30 are symbolized by an electromagnetic coil 31 acting on a braking plate 32, said braking plate 32 being connected to the second section 12 of the steering shaft 6.

The brake means 30 can be used for generating an end-stop feel, for a self alignment and for position error limitation. When for example the steered wheels 2 have reached an end-position, the brake means 30 prevent any further rotation of the steering shaft 6.

When a driver turns the steering wheel 7, the first section 11 of the steering shaft 6 is rotated as well and the sensor arrangement 8 directly detects the turning angle of the steering wheel 7.

However, the rotation of the first section 11 is not directly transmitted to the second section 12 of the steering shaft 6 since the coupling moment means 19 must be loaded before the second section 12 of the steering shaft 6 can follow the rotational movement of the first section 11.

Since the coupling moment means 19 has to be loaded before the return spring means 26 is tensioned, the driver experiences a torque starting from zero as it is shown in Fig. 4. This corresponds to the behaviour of a steering system in which the steering wheel is mechanically coupled to the steered wheels.

When the coupling moment means 19 prevent a further rotation of the first section 11 relative to the second section 12 of the steering shaft 6, the second section 12 follows the rotation of the first section 11. Only at this moment the return spring means 26 is tensioned so that the driver experiences a further increase of the torque as it is shown in Fig. 4. However, since the torque starts from zero at an angle of 0°, the driver has a more comfortable feeling.

When the steering shaft 6 is blocked in an end-stop position, it is nearly impossible to return the steering shaft 6 into neutral position by means of the return spring means 26 since the brake means 30 prevent the rotation in any direction. Even when the driver releases the steering wheel 7, the brake means 30 are still active.

With the embodiment shown this problem is overcome. When the driver releases the steering wheel 7, only the second section 12 of the steering shaft 6 is blocked against rotation. The first section 11 can still be rotated and will be rotated by the torque generated by the coupling moment means 19. This rotation is transmitted to the sensor arrangement 8 which detects that the steering shaft 6 has left the end-stop position. Therefore, the brake means 30 are released and the second section 12 can be rotated back to the neutral position by the torque generated by the return spring means 26. When the second section 12 has reached the neutral position, the coupling moment means 19 return the first section 11 back to a neutral position relative to the second section 12 so that the steering wheel 7 is in a neutral position as well.

## Claims

1. A steering unit (5) for a steer-by-wire steering system, said steering unit (5) comprising a steering shaft (6) having a connecting position (13) for a connection to a steering element (7), a sensor arrangement (8) connected to said steering shaft (6), and force feedback means (9) acting on the steering shaft (6) and return spring means (26) acting on the steering shaft (6), **characterized in that** said steering shaft (6) comprises a first section (11) and a second section (12), said first section (11) comprising said connecting position (13), said return spring means (26) acting on said second section (12), wherein the first section (11) and the second section (12) are coupled by coupling moment means (19), said coupling moment means (19) allowing a rotation of the two sections (11, 12) relative to each other over a limited angle.

2. The steering unit according to claim 1, **characterized in that** said sensor arrangement (8) is coupled to said first section (11).

3. The steering unit according to claim 2, **characterized in that** said force feedback means (9) comprise brake means (30), wherein said brake means (30) act on said second section (12).

4. The steering unit according to any of claims 1 to 3, **characterized in that** said limited angle is at least 5°.

5. The steering unit according to any of claims 1 to 4, **characterized in that** said coupling moment means (19) generate a counter moment in a direction opposite to a steering moment said counter moment being smaller than a moment created by said return spring means (26).

6. The steering unit according to any of claims 1 to 5, **characterized in that** said coupling moment means (19) comprise coupling spring means.

7. The steering unit according to any of claims 1 to 6, **characterized in that** said second section (12) comprises a sleeve surrounding at least a part of said first section (11).

8. The steering unit according to claim 7, **characterized in that** said return spring means (26) is formed as a helical coil spring surrounding a part of said sleeve.

9. The steering unit according to claim 7 or 8, **characterized in that** said braking means (30) comprise a braking plate (32) connected to said sleeve.

10. The steering unit according to any of claims 7 to 9, **characterized in that** said coupling moment means (19) is inserted in both of said sleeve and said first section (11).

11. The steering unit according to claim 10, **characterized in that** said first section (11) comprises a through bore (20) and said coupling moment means (19) are arranged in said through bore (20) and are inserted into said sleeve at both ends of said through bore (20).

12. The steering unit according to claim 11, **characterized in that** said coupling spring means comprise at least one leaf spring (21, 22), said leaf spring (21, 22) having a curved section (25) extending over at least a middle part of said leaf spring (21, 22), said curved section (25) contacting an element moveable together with said first section (11) of said steering shaft (6).

13. The steering unit according to claim 12, **characterized in that** said coupling spring means comprise at least a first leaf spring (21) and a second leaf spring (22), said leaf springs (21, 22) each having sections (25) curved in opposite directions relative to each other, said second leaf spring (22) forming said element moveable together with said first section (11) of said steering shaft (6).

## Patentansprüche

1. Lenkeinheit (5) für ein Steer-by-Wire-Lenksystem, wobei die Lenkeinheit (5) eine Lenkwelle (6) aufweist, die eine Verbindungsposition (13) für eine Verbindung mit einem Lenkelement (7), eine Sensoreinrichtung (8), die mit der Lenkwelle (6) verbunden ist, und Kraftrückmeldungsmittel (9), die auf die Lenkwelle (6) einwirken, und Rückstellfedermittel (26), die auf die Lenkwelle (6) einwirken, aufweist, **dadurch gekennzeichnet, dass** die Lenkwelle (6) einen ersten Abschnitt (11) und einen zweiten Abschnitt (12) aufweist, wobei der erste Abschnitt (11) die Verbindungsposition (13) aufweist, wobei die Rückstellfedermittel (26) auf den zweiten Abschnitt (12) einwirken, wobei der erste Abschnitt (11) und der zweite Abschnitt (12) durch Kupplungsmomentmittel (19) verbunden sind, wobei das Kupplungsmomentmittel (19) eine Drehung der zwei Abschnitte (11, 12) zueinander über einen beschränkten Winkel erlaubt.

2. Lenkeinheit nach Anspruch 1, **dadurch gekennzeichnet, dass** die Sensoreinrichtung (8) mit dem ersten Abschnitt (11) verbunden ist.

3. Lenkeinheit nach Anspruch 2, **dadurch gekennzeichnet, dass** die Kraftrückmeldungsmittel (9) Bremsmittel (30) aufweisen, wobei die Bremsmittel (30) auf den zweiten Abschnitt (12) einwirken.

4. Lenkeinheit nach einem der Ansprüche 1 bis 3, **dadurch gekennzeichnet, dass** der beschränkte Winkel mindestens 5° beträgt.

5. Lenkeinheit nach einem der Ansprüche 1 bis 4, **dadurch gekennzeichnet, dass** die Kupplungsmomentmittel (19) ein Gegenmoment in eine Richtung entgegengesetzt zu einem Lenkelement erzeugen, wobei das Gegenmoment kleiner ist als ein Moment, das von den Rückstellfedermitteln (26) erzeugt wird.

6. Lenkeinheit nach einem der Ansprüche 1 bis 5, **dadurch gekennzeichnet, dass** die Kupplungsmomentmittel (19) Kupplungsfedermittel aufweisen.

7. Lenkeinheit nach einem der Ansprüche 1 bis 6, **dadurch gekennzeichnet, dass** der zweite Abschnitt (12) eine Hülse aufweist, die mindestens einen Teil des ersten Abschnitts (11) umgibt.

8. Lenkeinheit nach Anspruch 7, **dadurch gekennzeichnet, dass** das Rückstellfedermittel (26) als eine Schraubenfeder ausgebildet ist, die einen Teil der Hülse umgibt.

9. Lenkeinheit nach Anspruch 7 oder 8, **dadurch gekennzeichnet, dass** die Bremsmittel (30) eine Bremsplatte (32) aufweisen, die mit der Hülse verbunden ist.

10. Lenkeinheit nach einem der Ansprüche 7 bis 9, **dadurch gekennzeichnet, dass** das Kupplungsmomentmittel (19) sowohl in die Hülse als auch in den ersten Abschnitt (11) eingefügt ist.

11. Lenkeinheit nach Anspruch 10, **dadurch gekennzeichnet, dass** der erste Abschnitt (11) eine durchgehende Bohrung (20) aufweist, und dass die Kupplungsmomentmittel (19) in der durchgehenden Bohrung (20) eingerichtet und in die Hülse an beiden Enden der durchgehenden Bohrung (20) eingefügt sind.

12. Lenkeinheit nach Anspruch 11, **dadurch gekennzeichnet, dass** die Kupplungsfedermittel mindestens eine Blattfeder (21, 22) aufweisen, wobei die Blattfedern (21, 22) einen gebogenen Abschnitt (25) haben, der sich über mindestens einen Mittenteil der Blattfeder (21, 22) erstreckt, wobei der gebogene Abschnitt (25) ein Element berührt, das gemeinsam mit dem ersten Abschnitt (11) der Lenkwelle (6) beweglich ist.

13. Lenkeinheit nach Anspruch 12, **dadurch gekennzeichnet, dass** die Kupplungsfedermittel mindestens eine erste Blattfeder (21) und eine zweite Blattfeder (22) aufweisen, wobei die Blattfedern (21, 22) jeweils Abschnitte (25) haben, die zueinander in entgegengesetzte Richtungen gebogen sind, wobei die zweite Blattfeder (22) das gemeinsam mit dem ersten Abschnitt (11) der Lenkwelle (6) bewegliche Element bildet.

## Revendications

1. Unité de direction (5) pour un système de direction à commande électrique, ladite unité de direction (5) comprenant un arbre de direction (6) ayant une position de raccordement (13) pour un raccordement à un élément de direction (7), un agencement de capteur (8) raccordé audit arbre de direction (6), et des moyens de retour de force (9) agissant sur l'arbre de direction (6) et des moyens de ressort de rappel (26) agissant sur l'arbre de direction (6), **caractérisée en ce que** ledit arbre de direction (6) comprend une première section (11) et une seconde section (12), ladite première section (11) comprenant ladite position de raccordement (13), lesdits moyens de ressort de rappel (26) agissant sur ladite seconde section (12), dans laquelle la première section (11) et la seconde section (12) sont couplées par des moyens de moment de couplage (19), lesdits moyens de moment de couplage (19) permettant une rotation des deux sections (11, 12) l'une par rapport à l'autre sur un angle limité.

2. Unité de direction selon la revendication 1, **caractérisée en ce que** ledit agencement de capteur (8) est couplé à ladite première section (11).

3. Unité de direction selon la revendication 2, **caractérisée en ce que** lesdits moyens de retour de force (9) comprennent des moyens de frein (30), dans laquelle lesdits moyens de frein (30) agissent sur ladite seconde section (12).

4. Unité de direction selon l'une quelconque des revendications 1 à 3, **caractérisée en ce que** ledit angle limité est d' au moins 5°.

5. Unité de direction selon l'une quelconque des revendications 1 à 4, **caractérisée en ce que** lesdits moyens de moment de couplage (19) génèrent un contre-moment dans une direction opposée à un moment de direction, ledit contre-moment étant inférieur à un moment créé par lesdits moyens de ressort de rappel (26).

6. Unité de direction selon l'une quelconque des revendications 1 à 5, **caractérisée en ce que** lesdits moyens de moment de couplage (19) comprennent des moyens de ressort de couplage.

7. Unité de direction selon l'une quelconque des revendications 1 à 6, **caractérisée en ce que** ladite seconde section (12) comprend un manchon entourant au moins une partie de ladite première section (11).

8. Unité de direction selon la revendication 7, **caractérisée en ce que** lesdits moyens de ressort de rappel (26) sont formés comme un ressort à enroulement hélicoïdal entourant une partie dudit manchon.

9. Unité de direction selon la revendication 7 ou 8, **caractérisée en ce que** lesdits moyens de freinage (30) comprennent un plateau de freinage (32) raccordé audit manchon.

10. Unité de direction selon l'une quelconque des revendications 7 à 9, **caractérisé en ce que** ledit moyen de moment de couplage (19) est inséré à la fois dans ledit manchon et dans ladite première section (11).

11. Unité de direction selon la revendication 10, **caractérisée en ce que** ladite première section (11) comprend un alésage traversant (20) et lesdits moyens de moment de couplage (19) sont agencés dans ledit alésage traversant (20) et sont insérés dans ledit manchon aux deux extrémités dudit alésage traversant (20).

12. Unité de direction selon la revendication 11, **caractérisée en ce que** lesdits moyens de ressort de couplage comprennent au moins un ressort à lames (21, 22), ledit ressort à lames (21, 22) ayant une section incurvée (25) s'étendant sur au moins une partie milieu dudit ressort à lames (21, 22), ladite section incurvée (25) venant en contact avec un élément mobile conjointement avec ladite première section (11) dudit arbre de direction (6).

13. Unité de direction selon la revendication 12, **caractérisée en ce que** lesdits moyens de ressort de couplage comprennent au moins un premier ressort à lames (21) et un second ressort à lames (22), lesdits ressorts à lames (21, 22) ayant chacun des sections (25) incurvées dans des directions opposées l'une par rapport à l'autre, ledit second ressort à lames (22) formant ledit élément mobile conjointement avec ladite première section (11) dudit arbre de direction (6).
